# EUROPEAN PATENT APPLICATION

(11) **EP 2 244 241 A1**
(43) Date of publication of application: **27.10.2010**
(21) Application number: 09703011.8
(22) Date of filing: 16.01.2009
(51) Int. Cl.: G09B 9/00

(54) **INSTRUCTOR SUPPORT SYSTEM**

(30) Priority: 17.01.2008 JP 2008007590
(71) Applicant: Kabushiki Kaisha Toshiba, Minato-ku Tokyo 105-8001 (JP)
(72) Inventor: USUI, Yukihiro, Tokyo 105-8001 (JP); OTSUKA, Hirokazu, Tokyo 105-8001 (JP); KATO, Takahisa, Tokyo 105-8001 (JP); UEDA, Hiroki, Tokyo 105-8001 (JP); WAJIMA, Seiko, Tokyo 105-8001 (JP)
(74) Representative: Joly, Jean-Jacques
(86) International application number: PCT/JP2009/000153
(87) International publication number: WO 2009/090885

(57) **Abstract**

An instructor support system has a plant simulation device (2) used for plant operation training, an instructor support device (1) that supports plant operation training, a dialog display device (3) that carries out an operation of the instructor support device and the like, a video device that records and reproduces a training state of the plant operation training, and an operator position detection means (50) that picks up an image of an operator with an operation detection video camera and carries out image processing or the like for the image in accordance with a pattern of clothes of the operator to generate operator position information. The instructor support device (1) has an operator position judgment means (110) that judges an operator position in accordance with the information received from the operator position detection means, an operator information saving means (112) that records a corresponding table between an ID code and an operator name and the like allocated to every pattern of the clothes of the operator, an operator name display data veneration means (111) that generates display data of the operator position and the operator name, and an operation history display screen (140) that shows the generated operator name display data to an instructor.

## Description

### TECHNICAL FIELD

The present invention relates to an instructor support system which supports instructor operations such as making an evaluation on operators when conducting a plant operation training by using a plant simulation device.

### BACKGROUND ART

When conducting a plant operation training by using a plant simulation device, an instructor support apparatus is used to support instructor operations such as making an evaluation on operators. Typical functions of such an instructor support apparatus include recording the operations of the operators in training, and comparing the operations with exemplary operation models to present an evaluation result to the instructor based on operation elements and temporal elements, thereby supporting instructor operations (for example, see Patent Documents 1 and 2).

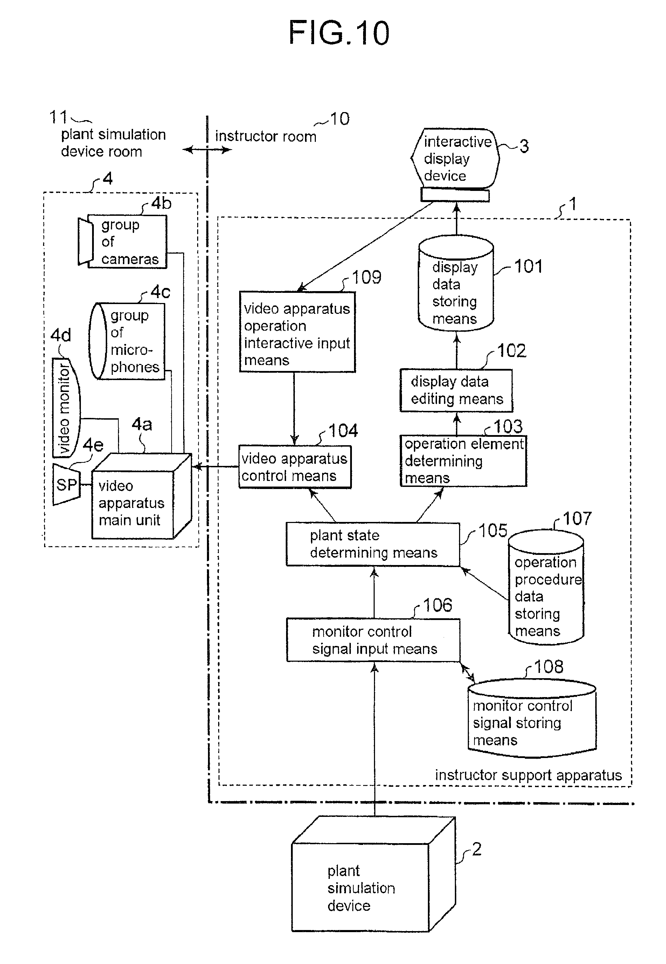

FIG. 10 is a block diagram of a conventional instructor support system. Plant simulation signals from a plant simulation device 2 for plant operation training are input to an instructor support apparatus 1. An interactive display device 3 is used to operate the instructor support apparatus 1 and display results. A video apparatus 4 for recording and reproducing the status of plant operation training is connected to the instructor support apparatus 1. The video apparatus 4 has a video apparatus main unit 4a to which a group of cameras 4b, a group of microphones 4c, a video monitor 4d, and a speaker 4e are connected. The instructor support apparatus 1 and the interactive display device 3 are typically installed in an instructor room 10. The plant simulation device 2 and the video apparatus 4 are installed in a plant simulation device room 11.

The instructor support apparatus 1 includes a display data storing means 101, a display data editing means 102, an operation element determining means 103, a video apparatus control means 104, a plant state determining means 105, a monitor control signal input means 106, an operation procedure data storing means 107, a monitor control signal storing means 108, and a video apparatus operation interactive input means 109.

The monitor control signal input means 106 inputs the plant simulation signals from the plant simulation device 2, i.e., operation signals and various control signals that occur when devices are activated by operation. The monitor control signal input means 106 then converts the signals into internal information on the instructor support apparatus 1, and outputs the internal information to the monitor control signal storing means 108 and the plant state determining means 105. The monitor control signal storing means 108 stores the operation signals and various control signals from the plant simulation device, occurring when devices are activated by operation, so that evaluation results equivalent to those during training can be displayed again after the end of the training.

The plant state determining means 105 determines the state of the plant from the signals input by the monitor control signal input means 106, extracts corresponding operation signal data from the operation procedure data storing means 107, and outputs the extracted operation signal data to the operation element determining means 103 along with the operators' operation signals. The operation procedure data storing means 107 contains procedure data based on a predetermined operation procedure. The procedure data includes operation details, operation time, condition values of monitor signals necessary for determining whether operations can be made or not, logical expressions and devises to be controlled, control signal values, and video control information. The plant state determining means 105 outputs a video control signal through the video apparatus control means 104 if video recording or the like is needed depending on the state of the plant.

Based on operation data included in the operation procedure data, the operation element determining means 103 outputs operation determination data, such as on whether the operators' operation signals and temporal elements are correct, incorrect, lagging, or leading, to the display data editing means 102. The display data editing means 102 inputs the operation determination data from the operation element determining means 103, edits the operation determination data and the operator operation information (operation details, time, etc.) into data to be displayed, and outputs the data to the display data storing means 101. The display data storing means 101 stores the display data for the interactive display device 3.

The video apparatus operation interactive input means 109 inputs a video apparatus operation request from the interactive display device 3, and outputs the video apparatus operation request to the video apparatus control means 104. The video apparatus control means 104 inputs video apparatus control signals from the plant state determining means 105 and the video apparatus operation interactive input means 109, and controls the video apparatus 4 for rewording, reproduction, etc.

As described above, the conventional instructor support system supports the instructor's operation for making an operation evaluation on operators through the recording and presentation of information such as on whether the operators' operation details are correct, incorrect, lagging, or leading as compared to the operation procedure data, and through the control of the video apparatus 4.
PATENT DOCUMENT 1: Japanese Patent Application Laid-Open Publication No. 4-107495
PATENT DOCUMENT 2: Japanese Patent Application Laid-Open Publication No. 2003-216016

### DISCLOSURE OF THE INVENTION

### PROBLEMS TO BE SOLVED BY THE INVENTION

A typical plant operation training involves a single instructor and a plurality of operators. The conventional instructor support system can record operations, whereas it depends on the instructor's memory, memos, and the like as to which operator made what operation. This has sometimes been detrimental to the accuracy of the evaluation operation.

Images and voices recorded during an operation training are of fixed location since the group of cameras 4b and the group of microphones 4c of the video apparatus 4 are stationary. It has not been able to record images or voices of an operation status in locations other than where the group of cameras 4b and the group of microphones 4c are installed.

Despite the recording of the operations, such items as the movements of the operators before making the operations are dependent on the instructor's memory, memos, etc. This has also been detrimental to the accuracy of the evaluation operations in some cases. Moreover, even if the voices during training are recorded on the video apparatus 4, the recorded contents need to be reproduced by the video apparatus 4 for review, which has made the instructor's evaluation work time-consuming.

In training, the instructor sometimes enter the instructor room in order to operate the plant simulation device 2. In such cases, it has been difficult to check the operation statuses of the operators who are making operations in the plant simulation device room 11. It has therefore been difficult to check if each individual operator makes a visual confirmation and other actions.

It is an object of the present invention to provide an instructor support system which can facilitate identifying operators to correctly grasp the movements of the operators and the statutes of operation for improves training efficiency.

### MEANS FOR SOLVING THE PROBLEM

According to an aspect of the present invention, there is provided an instructor support system comprising: a plant simulation device for plant operation training; an instructor support apparatus to which a plant simulation signal generated by the plant simulation device is input and that supports a plant operation training; an interactive display device from which the instructor support apparatus is operated and that displays a result; a video apparatus that records and reproduces a training status of the plant operation training; and operator position detecting means including an operation detecting video camera device and an image processing means, for shooting an operator with the operation detecting video camera, and performing image processing on a shot image based on a pattern of clothing of the operator to generate position information on the operator, wherein the instructor support apparatus includes: operator position determining means for determining a position of the operator based on information received from the operator position detecting means; operator information storing means containing a correspondence table on ID symbols assigned to patterns of clothing of respective operators and names of the operators; operator name display data generating means for generating display data on the position of the operator and the name of the operator based on the operator position determining means and the operator information storing means; and an operation history display screen that is capable of presenting the generated display data a on the operator name to an instructor.

According to another aspect of the present invention, there is provided an instructor support system comprising: a plant simulation device for plant operation training; an instructor support apparatus to which a plant simulation signal generated by the plant simulation device is input and that supports a plant operation training; an interactive display device from which the instructor support apparatus is operated and that displays a result; a video apparatus that records and reproduces a training status of the plant operation training; and operator position detecting means including an ID card/ tag signal receiving device that receives an ID card/tag signal of an ID card/tag carried by an operator, and generates position information on the operator and an ID card/tag number based on the ID card/tag signal, wherein the instructor support apparatus includes: operator position determining means for determining a position of the operator based on information received from the operator position detecting means; operator information storing means containing a correspondence table on ID card/tag numbers and names of operators; and operator name display data generating means for generating display data on the position of the operator and the name of the operator based on the operator position determining means and the operator information storing means.

### ADVANTAGE OF THE INTENTION

According to the present invention, there is provided an instructor support system through which individual operators can be easily identified and the operator's behavior and the situation during the operation can be properly grasped, and the efficiency of the training can be enhanced.

### BRIEF DESCRIPTION OF THE DRAWINGS

FIG. 1 is a block diagram of an instructor support system according to a first embodiment of the present invention.
FIG. 2 is a block diagram of an instructor support system according to a second embodiment of the present invention.
FIG. 3 is a block diagram of an instructor support system according to a third embodiment of the present invention.
FIG. 4 is a block diagram of an instructor support system according to a fourth embodiment of the present invention.
FIG. 5 is a block diagram of an instructor support system according to a fifth embodiment of the present invention.
FIG. 6 is a block diagram of an instructor support system according to a sixth embodiment of the present invention.
FIG. 7 is a block diagram of an instructor support system according to a seventh embodiment of the present invention.
FIG. 8 is a block diagram of an instructor support, system according to an eighth embodiment of the present invention.
FIG. 9 is a block diagram of an instructor support system according to a ninth embodiment of the present invention.
FIG. 10 is a block diagram of a conventional instructor support system.

### EXPLANATION OF REFERENCE SYMBOLS

1: instructor support apparatus; 2: plant simulation device; 3: interactive display device; 4: video apparatus; 5: ID card/tag signal receiving device; 6: human detection sensor device; 7: operator; 8: eye-sight camera; 9: ID card; 10: instructor room; 11: plant simulation device room; 12: sensor; 13: ID card/tag; 14: camera driving device; 15: microphone driving device; 16: FD unit; 17: instructor room video monitor; 18: instructor room speaker; 19: FD monitor; 20: image and voice receiver; 40: operation detecting video camera device; 41: image processing means; 50: operator position detecting means; 101: display data storing means; 102: display data editing means; 103: operation element determining means; 104: video apparatus control means; 105: plant state determining means; 106: monitor control signal input means; 107: operation procedure data storing means; 108: monitor control signal storing means; 109: video apparatus operation interactive input means; 110: operator position determining means; 111: operator name display data generating means; 122: operator information storing means; 113: camera driving device control means; 114: microphone driving device control means; 115: camera/microphone drive operation interactive input means; 116: operator movement track generating means; 117: plant simulation device room plan view storing means; 118: voice signal input means; 119: voice text conversion means; 120: human detection sensor position determining means; 121: monitoring FD switching means; 122: monitoring information storing means; 140: operation history display screen; 141: movement track display screen; 142: display data select operation interactive input means; 143: monitoring FD switch history data storing means; 144: monitoring FD switch operation interactive input means

### BEST MODE FOR CARRYING OUT THE INVENTION

### (First Embodiment)

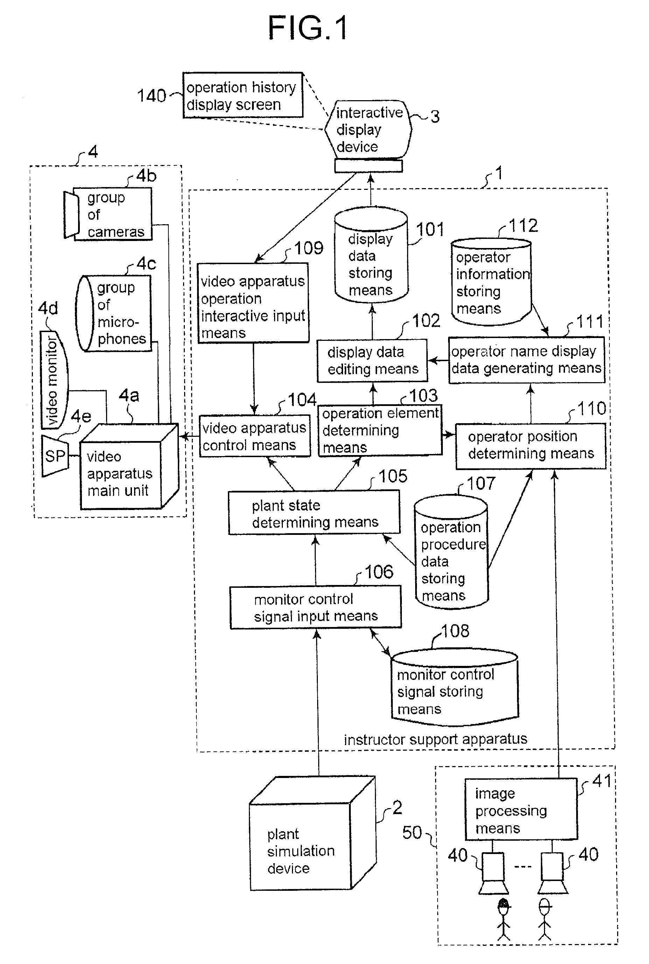

FIG. 1 is a block diagram of an instructor support system according to a first embodiment of the present invention. As compared to the conventional example shown in FIG. 10, the first embodiment is characterized by the following features. There is provided an operator position detecting means 50 for generating position information on operators. The operator position detecting means 50 includes operation detecting video camera devices 40 and an image processing means 41. The operation detecting video cameras 40 shoot operators. The image processing means 41 performs image processing on the image based on the patterns of the operators' clothing, thereby generating position information on the operators.

An instructor support apparatus 1 includes an operator position determining means 110, an operator information storing means 112, and an operator name display data generating means 111. The operator position determining means 110 determines the positions of the operators based on information received from the operator position detecting means 50. The operator information storing means 112 contains a correspondence table on ID (identification) symbols (such as ID numbers) assigned to the patterns of clothing of the respective operators and the names of the operators. The operator name display data generating means 111 generates display data on the positions of the operators and the operator names based on the operator position determining means 110 and the operator information storing means 112.

There is also provided an operation history display screen 140 which can present the operator name display data generated to an instructor. The same components as in FIG. 10 will be designated by like reference symbols, and redundant description will be omitted.

The operation detecting video camera devices 40 of the operator position detecting means 50 shoot the inside of the plant simulation device room, and transmit the shot data to the image processing means 41. The image processing means 41 comperes the transmitted data with previously registered data on the operators' clothing, and generates position information on the operators (for example, coordinates in the plant simulation device room) from the sizes of matching areas, the positions within the images, etc. The image processing means 41 outputs the generated position information to the operator position determining means 110 along with the ID symbols assigned to the respective patterns of the operators' clothing.

The operator position determining means 110 determines the clothing pattern that is detected in a position closest to a location of operation based on operation signal information (such as XX-ON: turn XX switch ON) and operation position coordinate information (such as 11-11) which are stored in the operation procedure data storing means 107 in synchronization with operation element determination timing given from the operation element determining means 103. The operator position determining means 110 notifies the ID symbol of the clothing pattern to the operator name display data generating means 111.

Based on the ID symbol notified, the operator name display data generating means 111 searches the information in the operator information storing means 112 (for example, the correspondence table on ID symbols and operator names) for an operator name, generates data to be displayed, and outputs the data to the display data editing means 102. The display data editing means 102 combines the conventional display data with the operator name from the operator name display data generating means 111, and outputs the result to the display data storing means 101. The operator name display data output is displayed on the operation history display screen 140 which is intended for presentation to the instructor. For the sake of identification of each individual operator, the operators are thus required to wear clothing of respective different patterns. With the clothing patterns registered in advance, it is possible to identify each individual operator and display operation details along with the name of the operator who made the operation. As for the clothing patterns, operators may wear caps of respective different colors, for example.

According to the first embodiment, it is possible to record operation details and the name of an operator corresponding to the clothing pattern that is detected in a position closest to the location of operation, whereby the operator can be identified. That is, the name of the operator who made the operation can be added to the operation details, so that more detailed training information concerning the operator's evaluation can be presented to the instructor.

### (Second Embodiment)

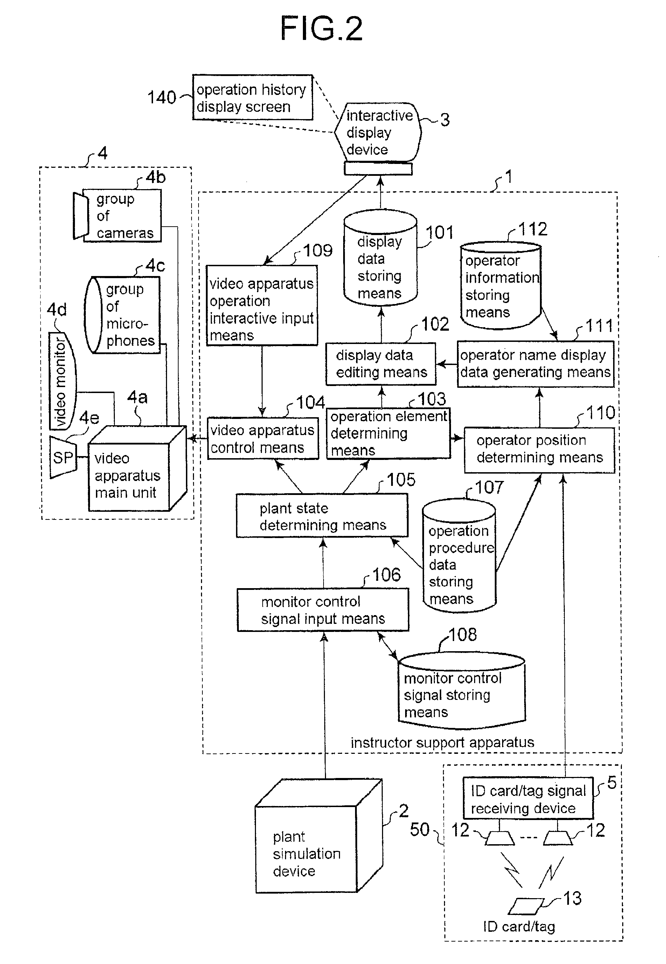

FIG. 2 is a block diagram of an instructor support system according to a second embodiment of the present invention. As compared to the first embodiment shown in FIG. 1, the second embodiment, is configured such that the operator position detecting means 50 for generating position information on operators includes an ID card/tag signal receiving device 5, sensors 12, and ID card/tags 13. The operator information storing means 112 contains a correspondence table on ID card/tag numbers and operator names. In other respects, the second embodiment is the same as the first embodiment shown in FIG. 1. The same components as in FIG. 1 will be designated by like reference symbols, and redundant description will be omitted.

The ID card/tag signal receiving device 5 receives ID card/tag signals of the ID card/tags 13 from the plurality of sensors 12 which are installed in the plant simulation device room. The ID card/tag signal receiving device 5 generates position information on operators (such as coordinates in the plant simulation device room) and ID card/tag numbers based on the signal intensities etc., and outputs the position information and the ID card/tag numbers to the operator position determining means 110.

The operator position determining means 110 determines the number of the ID card/tag that is closest to a location of the operation based on the operation signal information (such as "XX-ON": turn XX switch ON) and operation position coordinate information (such as "11-11") that are stored in the operation procedure data storing means 107 in synchronization with the operation, element, determination timing given from the operation element determining means 103. The operator position determining means 110 notifies the ID card/tag number to the operator name display data generating means 111.

Based on the ID card/tag number notified, the operator name display data generating means 111 searches the information in the operator information storing means 112 (for example, the correspondence table on ID symbols and operator names) for an operator name, generates data to be displayed, and outputs the data to the display data editing means 102. The display data editing means 102 combines the conventional display data with the operator name from the operator name display data generating means 111, and outputs the result to the display data storing means 101. The operator name display data output is displayed on the operation history display screen 140 which is intended for presentation to the instructor. As described above, the operators in training carry wireless ID cards/tags for identifying the respective operators. This makes it possible to identify each individual operator and display operation details along with the name of the operator who made the operation.

According to the second embodiment, it is possible to record operation details and the name of the operator who carries the ID card/tag that lies close to the location of operation, whereby the operator can be identified. That is, the name of the operator who made the operation can be added to the operation details, so that more detailed training information concerning the operator's evaluation can be presented to the instructor. In short, the same effect as that of the first embodiment, can be obtained by using ID cards/tags instead of clothing patterns.

### (Third Embodiment)

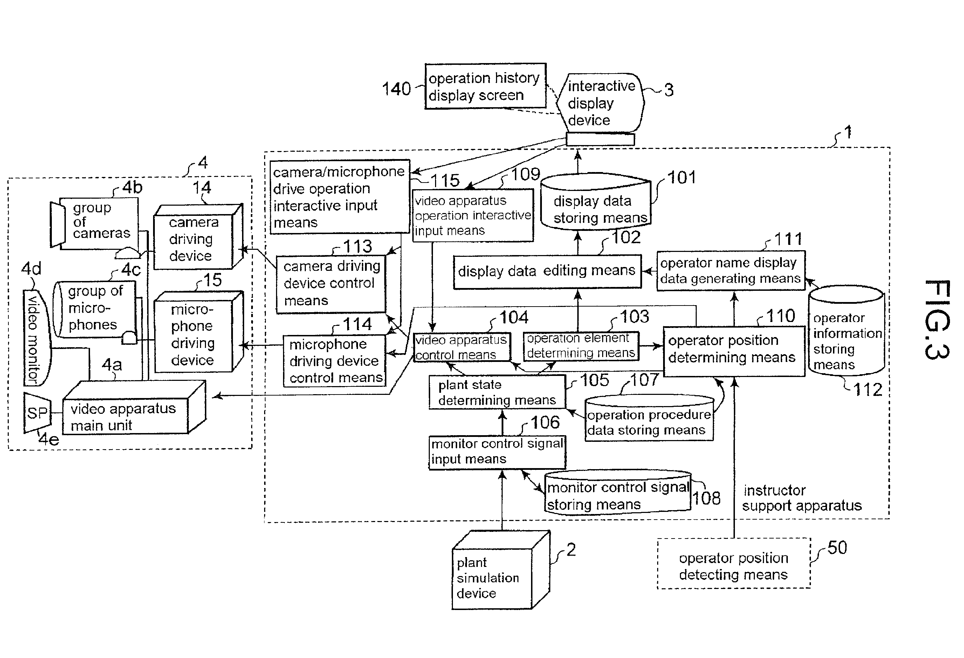

FIG. 3 is a block diagram of an instructor support system according to a third embodiment of the present invention. Unlike the first embodiment shown in FIG. 1 or the second embodiment shown in FIG. 2, the third embodiment is configured such that the video apparatus 4 includes a camera driving device 14 that drives the group of cameras 4b and a microphone driving device 15 that drives the group of microphones 4c.

The instructor support, apparatus 1 further includes a camera/microphone drive operation interactive input means 115, a camera driving device control means 113, and a microphone driving device control means 114. The camera/microphone drive operation interactive input means 115 outputs a drive command to the camera driving device 14 and the microphone driving device 15 of the video apparatus 4 in response to a request from the interactive display device 3. The camera driving device control means 113 performs drive control can the camera driving device 14 of the video apparatus 4 based can the operator position that is determined by the operator position determining means 110 from the data given from the operator position detecting means 50. The microphone driving device control means 114 performs drive control on the microphone driving device, 15 of the video apparatus 4 based on the operator position given from the operator position determining means 110. The operator position is determined from the data from the operator position detecting means 50.

The same components as in FIGS. 1 and 2 will be designated by like reference symbols, and redundant description will be omitted.

The video apparatus 4 includes the camera driving device 14 that drives the group of cameras 4b and the microphone driving device 15 that drives the group of microphones 4c. The camera driving device 14 and the microphone driving device 15 each control such items as a camera position, camera magnification, microphones position, and microphone directionality. The instructor support, apparatus 1 includes the camera driving device control means 113, the microphone driving device control means 114, and the camera/microphone drive operation interactive input means 115 which are intended to perform drive control on the group of cameras 4b and the group or microphones 4c.

The operator position determining means 110 notifies the operator position obtained from the data from the operator position detecting means 50 to the camera driving device control means 113 and the microphone driving device control means 114. The operator position determining means 110 also outputs recording and other video apparatus control commands to the video apparatus control means 104.

Based on the input operator position, the camera driving device control means 113 outputs adjustment commands on such items as a camera position and camera magnification to the camera driving device 14. Based on the input operator position, the microphone driving device control means 114 similarly outputs adjustment commands on such items as a microphone position and microphone directionality to the microphone driving device 15. Receiving the adjustment commands, the camera driving device 14 and the microphone driving device 15 drive the group of cameras 4b and the group of microphones 4c according to the commands so as to capture images and voices of operators. Such an operation can be continuously performed to record images and voices so as to follow the movements of the operator. The camera/microphone drive operation interactive input means 115 makes it possible to drive the group of cameras 4b and the group of microphones 4c according to a request from the interactive display device 3.

According to the second embodiment, the group of cameras 4b and the group of microphones 4c of the video apparatus 4 which have been of stationary type are replaced with movable units, and images and conversations (sound) are recorded so as to follow the operators in training. This makes it possible to record the movements of each individual operator in training for more detailed training evaluation.

### (Fourth Embodiment)

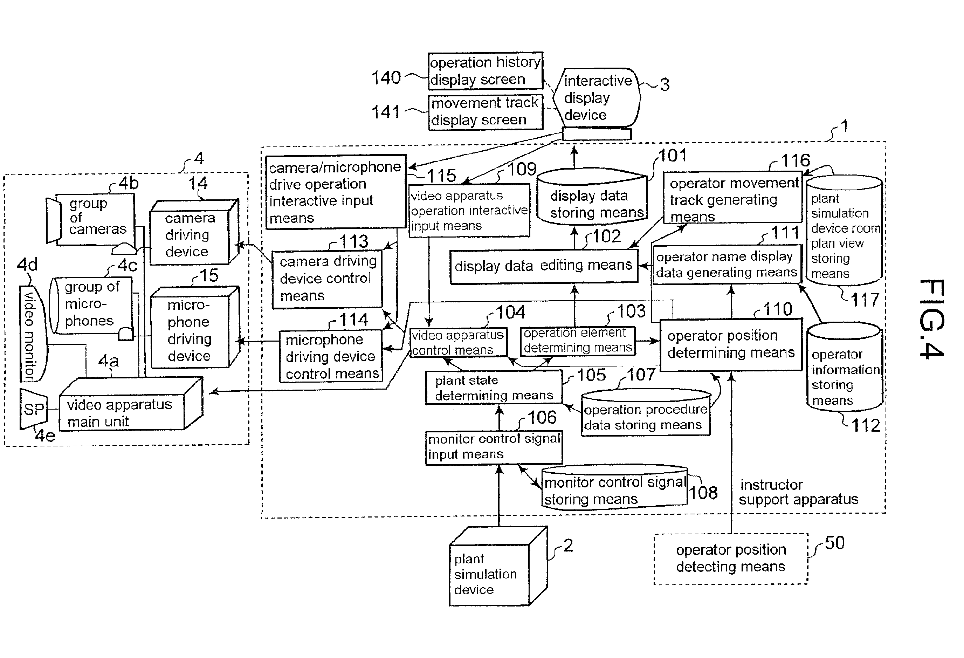

FIG. 4 is a block diagram of an instructor support system according to a fourth embodiment of the present invention. As compared to the third embodiment shown in FIG. 3, the fourth embodiment is configured so that the instructor support apparatus 1 includes: a plant simulation device plan view storing means 117 that contains coordinates on a plan view of the plant simulation device room; and an operator movement track generating means 166 for rendering the operator position information received from the operator position determining means 110 into coordinates on the plan view of the plant simulation device room which is stored in the plant simulation device room plan view storing means 117, and generating tracks of the positions with marks that vary from one operator to another. There is also provided a movement track display screen 141 for presenting the generated tracks of movements of the operators to the instructor. The same components as in FIG. 3 will be designated by like reference symbols, and redundant description will be omitted.

The plant simulation device plan view storing means 117 contains the coordinates on the plan view of the plant simulation device room. The operator movement track generating means 116 receives the operator position information from the operator position determining means 110, renders the operator position information into coordinates on the plan view of the plant simulation device room which is given from the plant simulation device room plan view storing means 117, and marks the positions with marks or colors that vary from one operator to another. The operator movement track generating means 116 outputs the result to the display data editing means 102 as data to be displayed.

The display data editing means 102 edits the data into graphic data that can be displayed on the interactive display device 3, and then outputs the graphic data to the display data storing means 101 so that the interactive display device 3 can display it. Such an operation can be continuously performed to display the movement tracks of the operator, whereby the movement, track display screen 141 is implemented.

According to the third embodiment, it is possible to display the movement tracks of the operators on the interactive display device 3, whereby the movement track display screen 141 is implemented. The movement of the operators can thus be grasped in a shorter time than when reproduced on the video apparatus 4.

### (Fifth Embodiment)

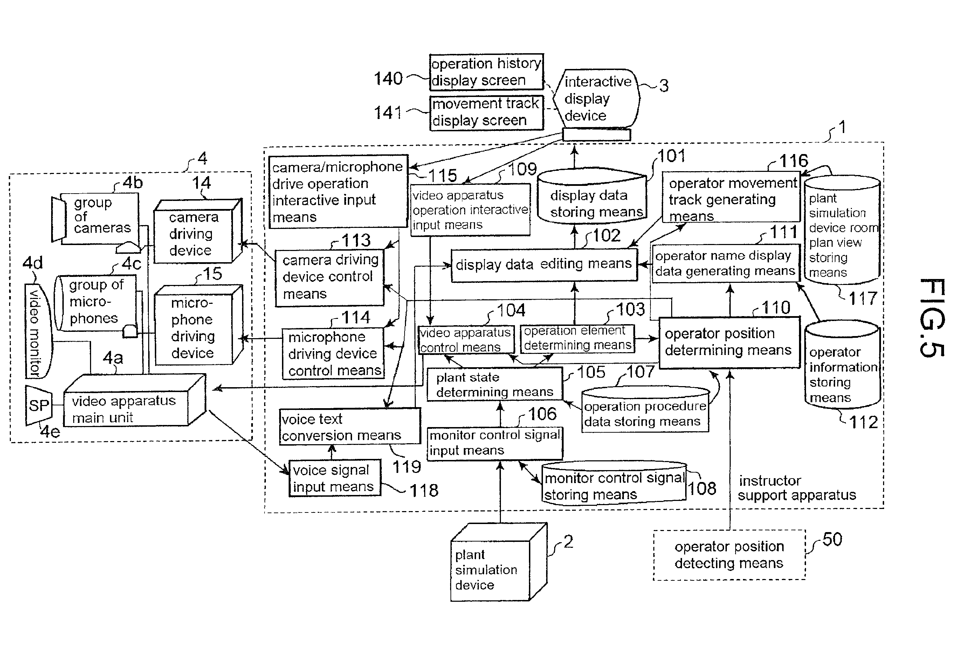

FIG. 5 is a block diagram of an instructor support system according to a fifth embodiment of the present invention. As compared to the fourth embodiment shown in FIG. 4, the fifth embodiment is configured so that the instructor support apparatus 1 includes a voice signal input means 118, a voice text conversion means 119, and an operation history display screen 140. The voice signal input means 118 inputs voice signals that are collected by the group of microphones 4c of the video apparatus 4. The voice text conversion means 119 performs conversion processing from voice to text at the timing of reception of the operator position information from the operator position determining means 110, thereby converting the voice signals into data to be displayed on the interactive display device 3 along with operator names. The operation history display screen 140 can display and present the concerted text to the instructor. The same components as in FIG. 4 will be designated by like reference symbols, and redundant description will be omitted.

The voice signal input means 118 inputs voice signals from the group of microphones 4c provided on the video apparatus 4 into the instructor support apparatus 1. The voice text conversion means 119 receives the operator position information from the operator position determining means 110, and performs the conversion processing from voice to text at that timing. The voice text information rendered in text by the voice text conversion means 119 is output to the display data editing means 102, and is output to the display data storing means 101 as the data to be displayed on the interactive display device 3 along with the operator operation information, operation determination data, and operator names which have been described previously. The output data to be displayed is displayed on the operation history display screen 140 for the sake of presentation to the instructor.

According to the fourth embodiment, it is possible to display the conversations of the operators on the interactive display device 3. The conversations of the operators can thus be grasped in a shorter time than when reproduced on the video apparatus 4. Consequently, it is possible to reduce the time necessary for the instructor to make a training evaluation.

### (Sixth Embodiment)

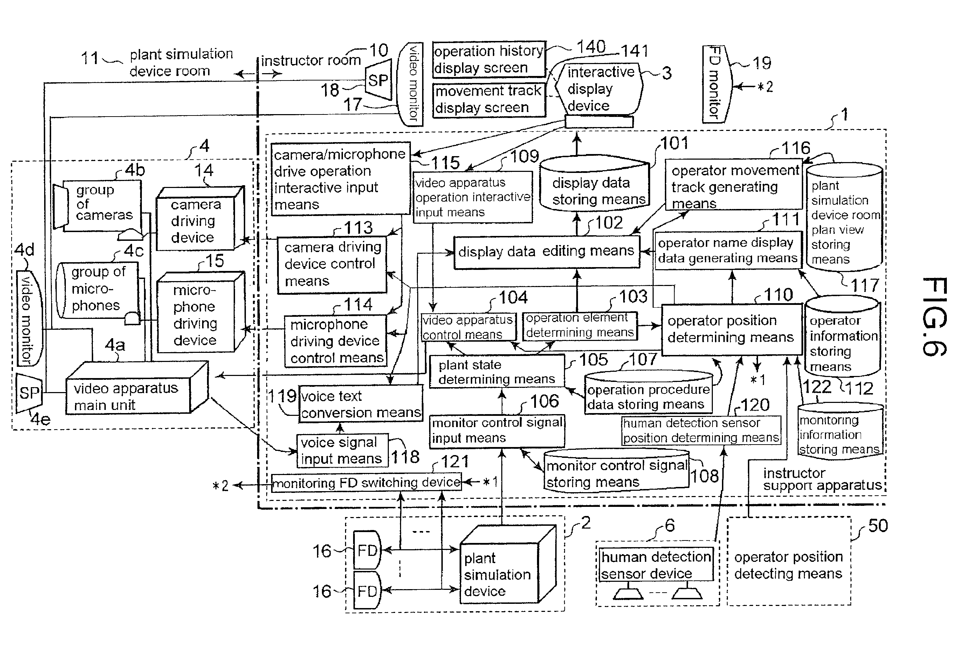

FIG. 6 is a block diagram of an instructor support system according to a sixth embodiment, of the present invention. As compared to the fifth embodiment, shown in FIG. 5, the sixth embodiment includes a human detection sensor device 6 which is installed in the plant simulation device room 11. The instructor support, apparatus 1 includes: a human detection sensor position determining means 120 for inputting human detection sensor signals from the human detection sensor device 6; a monitoring FD (Flat Display) switching means 121 for switching and selecting FD units 16 of the plant simulation device 2 to monitor; and a monitoring information storing means 122 for storing information such as on the "being used or not being used" (use/disuse) of the human detection sensor device 6 upon performing monitoring. In the instructor room 10, there is provided an instructor room video monitor 17, an instructor room speaker 18, and an FD monitor 19 which is equivalent to the FD units 16 of the plant simulation device 2. That is, the FD monitor 19 is equivalent to the FD units 16 which are the operation terminals of the plant simulation device 2 to be used for operation and display during a plant operation. In FIG. 6, the same components as in FIG. 5 will be designated by like reference symbols, and redundant, description will be omitted.

The human detection sensor device 6 is installed in a certain area in the plant, simulation device room 11. The human sensor device 6 detects the entry of an operator into that area, and makes a notification to the human detection sensor position determining means 120 of the instructor support apparatus 1. The human detection sensor position determining means 120 convents the position of the area into operator position information based on the notified human detection sensor signal, and outputs the result to the operator position determining means 110.

As described in the second embodiment, the operator position determining means 110 performs drive control on the group of cameras 4b by using the camera driving device 14 of the video apparatus 4 and performs drive control on the group of microphones 4c by using the microphone driving device 15 through the intervention of the camera driving device control means 113 and the microphone driving device control means 114. The images and voices of the area detected by the human detection sensor device 6 are thus monitored.

The images and voices to be monitored can be checked through the instructor room video monitor 17 and the instructor room speaker 18 which are installed in the instructor room 10. The monitoring FD switching means 121 switches and selects FD device of the plant simulation device to monitor. The monitoring FD switching means 121 witches and selects FD units 16 according to a notification from the operator position determining means 110. The contents of the display on the selected FD unit 16 are also displayed on the FD monitor 19 which is installed in the instructor room 10.

The foregoing description has dealt with the case where the human detection sensor device 6 is used to detect the area where an operator is. The same operation will be made when the signal from the operator position detecting means 50 is used to detect the area where an operator is.

When performing monitoring, the monitoring information storing means 122 stores information such as on the use/disuse of the human detection sensor device 6, the use/disuse of the operator position detecting means 50, the execution of monitoring using the video apparatus 4, and the execution of monitoring using the FD monitor 19.

According to the sixth embodiment, the detecting signal of the human detection sensor device 6 or the operator position detecting means 50 can be used to output monitoring information (images and voices) to the instructor room 10 when an operator enters certain area in the plant simulation device room 11. This makes it possible for the instructor to check the status of operation of the operator without leaving the instructor room.

### (Seventh Embodiment)

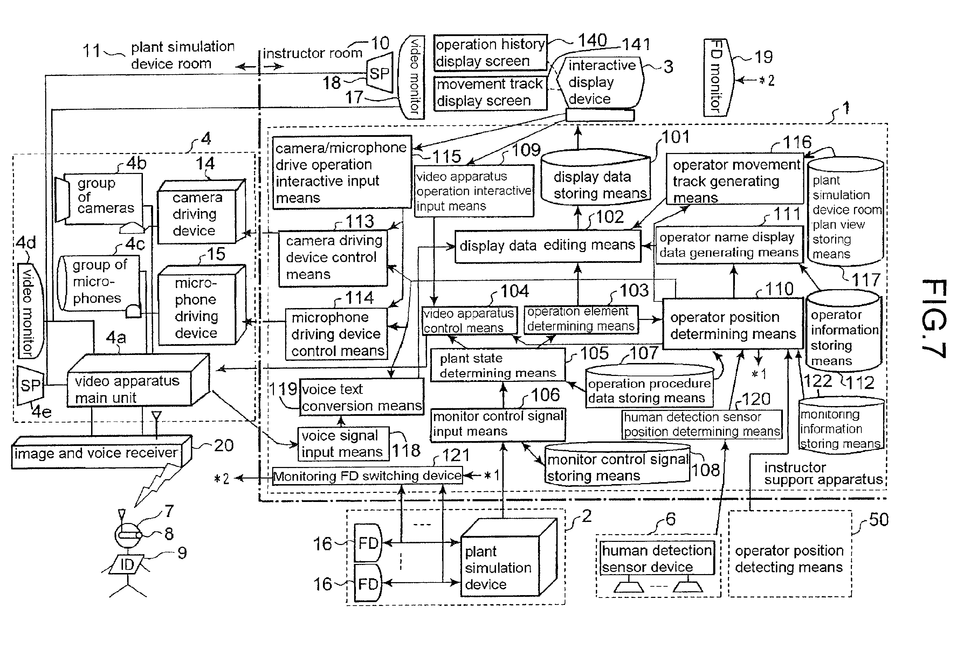

FIG. 7 is a a block diagram of an instructor support system according to a seventh embodiment of the present invention. As compared to the sixth embodiment shown in FIG. 6, the seventy embodiment is configured so that the video apparatus includes a receiver that receives an eye-sight image from an eye-sight camera which an operator carries. The same components as in FIG. 6 will be designated by like reference symbols, and redundant description will be omitted.

The video apparatus 4 includes an image and voice receiver 20.

The operator 7 in training carries a wireless eye-sight camera (eye camera) 8, a not-shown pin microphone, and an ID card 9. The image from the eye camera 8 and the voice from the pin microphone are taken into the video apparatus main unit 4a through the image and voice receiver 20 of the video apparatus 4. Carrying the eye camera 8 that is adjusted to the line of sight of the operator 7 makes it possible to record the eye-sight, image of the operator 7.

According to the sixth embodiment, it is possible to check the visual confirmation action of the operator for detailed training evaluation. It is also possible to collect the operators's voice directly, so that the operator's voice can be recorded even in a noisy location etc. This can improve the accuracy of the voice-to-text conversion.

### (Eighth Embodiment)

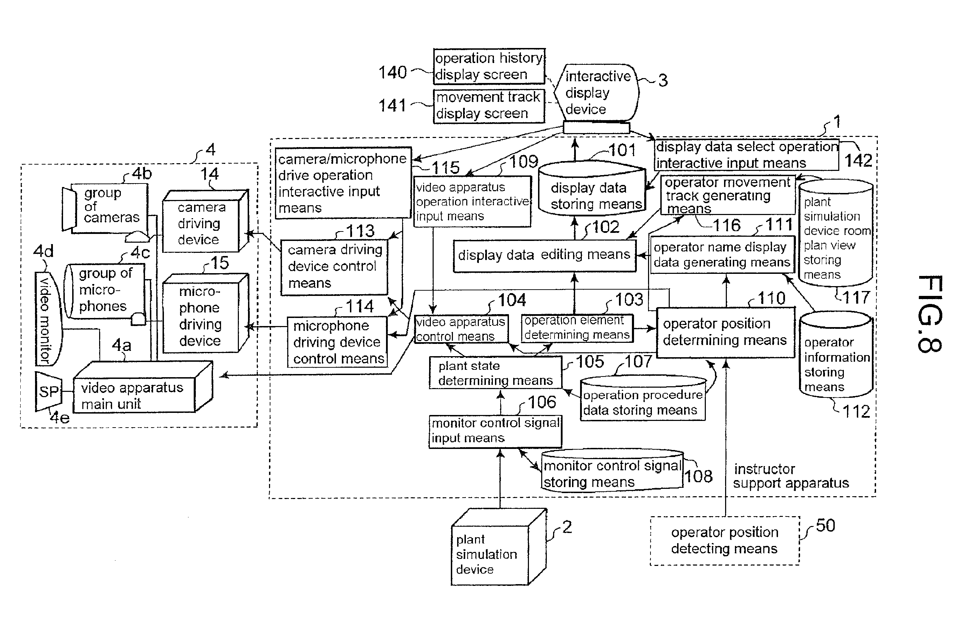

FIG. 8 is a block diagram of an instructor support system according to an eighth embodiment of the present invention.

As compared to the fourth embodiment shown in FIG. 4, the eighth embodiment includes a display data select operation interactive input means 142 for setting whether or not to use the data stored in the display data storing means for display depending on a request from the interactive display device. In FIG. 8, the same components as in FIG. 4 will be designated by like reference symbols. Redundant description will be omitted.

The instructor sets conditions on such items as an operator and time from the movement track display screen 141 displayed on the interactive display device 3. The conditions are passed to the display data select operation interactive input means 142. The display data select operation interactive input means 142 sets a flag that indicates a display target only on pieces of data stored in the display data storing means that match the conditions. The movement track display screen 141 draws only the pieces of data on which the flag indicating a display target is set, whereby the instructor can select display data.

According to the eight embodiment, it is possible to select the movement track of a certain operator alone and superimpose the track on-screen, to select all the movement tracks in a certain time and superimpose the tracks on screen, and to superimpose the movement tracks of different operators in different times. By such operations, it is possible to compere movement tracks in an intuitive way on such occasions as a training review and make an evaluation on the training results of the operators.

### (Ninth Embodiment)

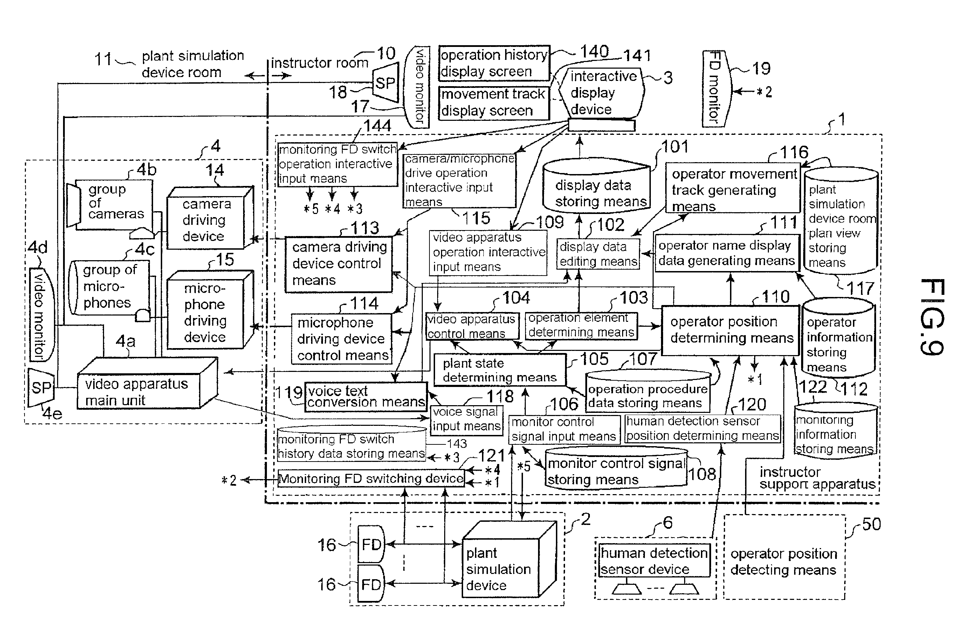

FIG. 9 is a block diagram of an instructor support system according to a ninth embodiment of the present invention.

As compared to the sixth embodiment shown in FIG. 6, the ninth embodiment includes a monitoring FD switch history data storing means 143 and a monitoring FD switch operation interactive input means 144. The monitoring FD switch history data storing means 143 stores monitoring FD switch history data. When an arbitrary location on a movement track displayed on the movement track display screen 141 is selected, the monitoring FD switch operation interactive input means 144 searches the monitoring FD switch history data storing means 143 for actual monitoring FD switch history data at that point in time. Based on the search result, the monitoring FD switch operation interactive input means 144 instructs the monitoring FD switching means 121 to switch the display of the instructor room FD monitor 19.

In FIG. 9, the same components as in FIG. 6 will be designated by like reference symbols. Redundant description will be omitted.

When the instructor selects an arbitrary location on a movement track displayed on the movement, track display screen 141 which appears on the interactive display device 3, the time signal corresponding to the selected location is passed to the monitoring FD switch operation interactive input means 144. The monitoring FD switch operation interactive input means 144 searches the monitoring FD switch history data storing means 143 for monitoring FD switch history data corresponding to that time, and instructs the monitoring FD switching means 121 to switch the display of the instructor room FD monitor 19 based on the search result. The monitoring FD switch history data shall have been stored into the monitoring FD switch history data storing means 143 during actual training, simultaneously with when the monitoring FD switching means 121 switches the monitoring target based on the operator position information determined by the operator position determining means 110. When the monitoring FD switch operation interactive input means 144 instructs the monitoring FD switch means 121 to switch the display of the instructor FED monitor 19, the monitoring FD switch operation interactive input means 144 may instruct the plant simulation device 2 to simulate the plant state of that time. This can make the contents of the display data of the screen appearing on the instructor room FD monitor 19 the same as at the time of training.

According to the ninth embodiment, when an arbitrary location on a movement track displayed is selected, the screen that was actually displayed at the time of training can be automatically recalled and displayed on the instructor room FD monitor 19. It is therefore possible to conduct a training review and the like efficiently.

## Claims

1. An instructor support system comprising:
a plant simulation device for plant, operation training;
an instructor support apparatus to which a plant simulation signal generated by the plant simulation device is input and that supports a plant operation training;
an interactive display device from which the instructor support apparatus is operated and that displays a result;
a video apparatus that records and reproduces a training status of the plant operation training; and
operator position detecting means including an operation detecting video camera device and an image processing means, for shooting an operator with the operation detecting video camera, and performing image processing on a shot image based on a pattern of clothing of the operator to generate position information on the operator, wherein
the instructor support apparatus includes:
operator position determining means for determining a position of the operator based on information received from the operator position detecting means;
operator information storing means containing a correspondence table on ID symbols assigned to patterns of clothing of respective operators and names of the operators;
operator name display data generating means for generating display data on the position of the operator and the name of the operator based on the operator position determining means and the operator information storing means; and
an operation history display screen that is capable of presenting the generated display data on the operator name to an instructor.

2. An instructor support system comprising:
a plant simulation device for plant operation training;
an instructor support apparatus to which a plant simulation signal generated by the plant simulation device is input and that supports a plant operation training;
an interactive display device from which the instructor support apparatus is operated and that displays a result;
a video apparatus that records and reproduces a training status of the plant operation training; and
operator position detecting means including an ID card/tag signal receiving device that receives an ID card/tag signal of an ID card/tag carried by an operator, and generates position information on the operator and an ID card/tag number based on the ID card/tag signal, wherein
the instructor support apparatus includes
operator position determining means for determining a position of the operator based on information received from the operator position detecting means;
operator information storing means containing a correspondence table on ID card/tag numbers and names of operators; and
operator name display data generating means for generating display data on the position of the operator and the name of the operator based on the operator position determining means and the operator information storing means.

3. The instructor support system according to claim 1 or 2, wherein
the video apparatus includes a camera driving device that drives a group of cameras and a microphone driving device that drives a group of microphones; and
the instructor support apparatus includes:
camera/microphone drive operation interactive input means for outputting a drive command to the camera driving device and the microphone driving device of the video apparatus in response to a request from the interactive display device;
camera driving device control means for performing drive control on the camera driving device of the video apparatus based on position of the operator determined by the operator position determining means; and
microphone driving device control means for performing drive control on the microphone driving device of the video apparatus based on the position of the operator determined by the operator position determining means.

4. The instructor support, system according to any one of claims 1 to 3, wherein the instructor support apparatus includes:
plant simulation device plan view storing means containing coordinates on a plan view of a plant simulation device room;
operator movement track generating means for rendering the operator position information received from the operator position determining means into coordinates on the plan view of the plant simulation device room stored in the plant simulation device room plan view storing means, and generating a track of the positions with marks that vary from one operator to another; and
a movement track display screen that displays and presents the generated track of movement of the operator to the instructor.

5. The instructor support system according to any one of claims 1 to 4, wherein the instructor support apparatus includes:
voice signal input means for inputting a voice signal collected by the group of microphones of the video apparatus;
voice text conversion means for performing conversion processing from voice to text at timing of reception of the operator position information from the operator position determining means, thereby converting the voice signal into data to be displayed on the interactive display device along with an operator name; and
an operation history display screen that is capable of displaying and presenting the converted text to the instructor.

6. The instructor support, system according to any one of claims 1 to 5, comprising
a human detection sensor device that detects entry of an operator into a certain area in the plant simulation device room;
human detection sensor position determining means for converting a position of the area where the operator is into operator position information based on a human detection sensor signal detected by the human detection sensor device, and outputting the operator position information to the operator position determining means;
an instructor room video monitor that displays an image obtained by the group of cameras of the video apparatus based on the operator position information that is detected by the human sensor position determining means and determined by the operator position determining means;
an instructor room speaker that outputs a voice obtained by the group of microphones of the video apparatus based on the operator position information that is detected by the human sensor position determining means and determined by the operator position determining means;
monitoring FD switching means for switching and selecting FD units of the plant simulation device to monitor based on the operator position information that is detected by the human detection sensor position determining means and determined by the operator position determining means;
an instructor room FD monitor that displays a result of switching and selection of the monitoring FD switching means; and
monitoring information storing means for storing information such as on use/disuse of the human detection sensor device upon performing monitoring.

7. The instructor support system according to any one of claims 1 to 6, wherein the video apparatus includes a receiver that receives an eye-sight image of an eye-sight camera carried by an operator.

8. The instructor support system according to claim 4, wherein:
the instructor support apparatus includes a display data select operation interactive input means for setting whether or not to use data stored in the display data storing means for display in response to a request from the interactive display device; and
the movement track display screen is capable of selecting and displaying only a movement track of concern.

9. The instructor support system according to claim 6, wherein the instructor support apparatus includes:
monitoring FD switch history data storing means for storing monitoring FD switch history data; and
monitoring FD switch operation interactive input means for searching, when an arbitrary location on a movement track displayed on the movement track display screen is selected, the monitoring FD switch history data storing means for actual monitoring FD switch history data at that point in time, and instructing the monitoring FD switching means based on the search result to switch display of the instructor room FD monitor,
whereby the selection of an arbitrary location on the movement track displayed on the movement track display screen can be linked with the display of the instructor room FD monitor.
